(19) Europäisches Patentamt
European Patent Office
Office européen des brevets

(11) Veröffentlichungsnummer: **0 021 212**
**B1**

(12) # EUROPÄISCHE PATENTSCHRIFT

(45) Veröffentlichungstag der Patentschrift: **08.08.84**

(51) Int. Cl.³: **C 08 C 19/08**, C 08 F 36/18

(21) Anmeldenummer: **80103189.9**

(22) Anmeldetag: **09.06.80**

(54) **Verfahren zur Herstellung von lagerstabilen 2-Chlor-1,3-butadien/Schwefel Copolymerisaten.**

(30) Priorität: **19.06.79 DE 2924660**

(43) Veröffentlichungstag der Anmeldung: **07.01.81 Patentblatt 81/1**

(45) Bekanntmachung des Hinweises auf die Patenterteilung: **08.08.84 Patentblatt 84/32**

(84) Benannte Vertragsstaaten: **BE DE FR GB IT NL**

(56) Entgegenhaltungen:
**EP - A - 0 011 029**
**FR - A - 1 398 602**
**US - A - 2 234 215**

(73) Patentinhaber: **BAYER AG, Konzernverwaltung RP Patentabteilung, D-5090 Leverkusen 1 Bayerwerk (DE)**

(72) Erfinder: **Musch, Rüdiger, Dr., Altenberger-Dom-Strasse 169, D-5060 Bergisch-Gladbach 2 (DE)**
Erfinder: **Schubart, Rüdiger, Dr., An der Engelsfuhr 27, D-5060 Bergisch-Gladbach 2 (DE)**
Erfinder: **Göbel, Wilhelm, Dr., Max-Beckmann-Strasse 37, D-5090 Leverkusen 1 (DE)**
Erfinder: **Pampus, Gottfried, Dr., Friedrich-Weskott-Strasse 14, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 021 212 B1

BUNDESDRUCKEREI BERLIN

## Beschreibung

Die Erfindung betrifft ein Verfahren zur Herstellung lagerstabiler 2-Chlor-1,3-butadien/Schwefel-Copolymerisate in Anwesenheit von schwefelhaltigen Peptisierungsmitteln.

Die Herstellung der 2-Chlor-butadien/Schwefel-Copolymeren erfolgt üblicherweise in wäßriger Emulsion, wobei auch weitere copolymerisationsfähige Monomere mit einer Vinyl- oder Vinylidengruppe, wie z. B. 2,3-Di-chlorbutadien, 1-Chlorbutadien oder Methacrylsäure als Comonomeres zugegen sein können. Bei diesen Polymeren erfolgt die Molekulargewichtseinstellung im allgemeinen nicht durch Zusatz eines Reglers während der Polymerisation, sondern durch einen der Polymerisation nachgeschalteten sogenannten Peptisationsschritt. Unter Peptisation wird hier die Spaltung der Polymerketten an ihren Schwefelsegmenten verstanden. Dieser Schritt ist notwendig, um die problemlose Verarbeitung des Festkautschuks zu gewährleisten. Das häufig eingesetzte Peptisationsagens Tetraethylthiuramdisulfid (TETD), kann mit bestimmten nukleophil wirkenden Substanzen, wie z. B. Aminen oder Dithiocarbamaten, kombiniert werden (DE-OS 2 018 736). Der nach der Polymerisation erhaltene Latex wird üblicherweise bei 40—70° C peptisiert. Die Geschwindigkeit der Peptisation hängt unter anderem von der Menge des Peptisationsagens wie z. B. Tetraethylthiuramdisulfid (TETD) ab, von Art und Menge des Nukleophils und von der Temperatur. Die Peptisationszeit beträgt normalerweise 2—20 Stunden. Aus wirtschaftlichen Gründen und um Nebenreaktionen zurückzudrängen ist jedoch eine schnelle Peptisation erwünscht. Sie ist jedoch schwer zu steuern und zu kontrollieren. Darüber hinaus setzt sich meist der Abbauvorgang im peptisierten Latex selbst bei tiefer Lagertemperatur fort, so daß man gezwungen ist, den Latex möglichst rasch zum Festkautschuk aufzuarbeiten.

Ein weiterer Weg zur Herstellung von 2-Chlor-1,3-butadien/Schwefel-Copolymeren mit technologisch günstigen Mooney-Viskositäten führt über eine Regelung der Polymerisation mit Xanthogendisulfiden (DE-OS 2 213 116). Der Nachteil dieser Methode liegt jedoch ebenfalls darin, daß die so erhaltenen Copolymerisate nicht hinreichend lagerungsstabil sind. Es wird zwar vorgeschlagen (US-PS 3 766 121), die Lagerungsstabilität durch Zusatz bestimmter Mengen an Sulfit oder Thiosulfat zum Latex zu verbessern, jedoch besteht hier eine Abhängigkeit von der Lagerzeit.

Die Peptisation von 2-Chlor-1,3-butadien/Schwefel-Copolymeren erfolgt nach DE-OS 2 134 158 durch Zusatz von Thiolen wie n-Dodecylmercaptan zum fertigen Latex. Obwohl man dabei von einem durch Modifiziermittel wie Dialkylxanthogendisulfid bereits geregelten Copolymerisat ausgeht, dessen Festkautschuk eine Mooney-Viskosität von 60—100 besitzt, sind immer noch erhebliche Mengen an Mercaptan notwendig, um eine Peptisation zu erzielen. Darüber hinaus ist diese Peptisation nur bei einem alkalischen Latex mit einem pH größer als 9,5 möglich.

Aus US-A 2 234 215 wird die Peptisation mit Diphenyldisulfid empfohlen. Mit dieser Substanz werden jedoch keine ausreichend niedrigen Lösungsviskositäten nach der Peptisation erhalten.

Es war daher überraschend festzustellen, daß schon geringe Mengen eines Diarylpolysulfids mit einer Schwefelkette aus 4 bis 6 S-Atomen ausreichen, um ein ungeregeltes schwefel-modifiziertes Polychloropren mit hoher Mooney-Viskosität in kürzester Zeit auf eine technologisch günstige Mooney-Viskosität von 40—50 ME abzubauen und ausreichend niedrige Lösungsviskositäten nach der Peptisation zu erhalten. Dieser Vorgang läuft nicht nur im alkalischen, sondern auch im sauren pH-Bereich schnell ab.

Gegenstand der Erfindung ist somit ein Verfahren zur Herstellung lagerstabiler 2-Chlor-1,3-butadien-Schwefel-Copolymerisate durch Peptisation mittels Diarylsulfiden als Peptisierungsmittel, das dadurch gekennzeichnet ist, daß man eine Verbindung der Formel

$$R_1-S_n-R_1$$

in der

n einen Zahlenwert von 4 bis 6 bedeutet und

$R_1$ einen $C_6-C_{14}$-Arylrest oder einen $C_6-C_{14}$-Aryl-$C_1-C_3$-Alkylrest, die gegebenenfalls substituiert sein können,

darstellt, gegebenenfalls in Kombination mit einer nukleophil wirkenden Substanz dem hochviskosen Latex nach der Polymerisation zusetzt und bei 5—100° C bei einen pH-Wert von 14—3 peptisiert.

Als Arylrest seien beispielsweise Phenyl, Naphthyl oder Anthranyl und als Aralkyl Benzyl genannt.

Als Substituenten des Restes $R_1$ kommen in Betracht: ein oder mehrere (bevorzugt bis 5) geradkettig, verzweigte, gesättigte oder ungesättigte $C_1-C_{18}$, bevorzugt $C_1-C_9$, insbesondere $C_1-C_4$-Alkylgruppen; $C_4-C_{10}$-Cycloalkyl; $C_6-C_{14}$-Aryl; $C_1-C_8$-Alkyloxy; $C_6-C_{14}$-Aryloxy; Halogen (F, Cl, Br, I); halogeniertes $C_1-C_4$-Alkyl, wie Chlormethyl, Trichlormethyl oder Trifluormethyl; Carboxyl; $C_1-C_8$-Alkoxycarbonyl; Amino; Monoalkyl, Dialkylamino mit $C_1-C_8$-Alkyl; $C_6-C_{14}$-Arylamino, wie Phenylamino oder Tolylamino; 1—2 Nitrogruppen.

Als bevorzugte Substituenten seien genannt: Alkyl, Aryl, Alkyloxy, Aryloxy, Kernhalogen, Carboxyl, Alkoxycarbonyl, besonders bevorzugt kommt für $R_1$ in Betracht: Aryl, Aralkyl, die gegebenenfalls substituiert sein können durch Alkyl, Halogen (Cl, Br) Alkyloxy, Aryloxy, Carboxyl und/oder Alkoxycar-

bonyl.

Insbesondere sei für $R_1$ Phenyl genannt.

Als Alkyl kann eingesetzt werden: Methyl, Ethyl, n-Propyl, iso-Propyl, n-Butyl, iso-Butyl, tert.-Butyl, n-Butyl, iso-Pentyl, tert. Pentyl, Propenyl, Butylenyl, Hexyl, iso-Hexyl, tert. Hexyl, n-Hexyl, Heptyl, Oktyl, 2-Ethylhexyl, Dodecyl, Undecyl, Decyl, Tridecyl, Tetradecyl, Pentadecyl, Hexadecyl, Heptadecyl, Oktadecyl;
als Cycloalkyl kann stehen Cyclobutyl, Cyclopentyl, Cyclohexyl, Cycloheptyl, Cyclohexenyl, Cyclooktyl, Cyclononyl, Cyclodecyl;
als $R_1$ seien genannt: Phenyl, o-, p-Methylphenyl, o-, m-, p-Chlorphenyl, o-, m-, p-Carboxylphenyl, o-, m-, p-Fluorphenyl, o-, m-, p-Bromphenyl, o-, m-, p-Nitrophenyl, o-, m-, p-Dimethylaminophenyl, o-, m-, p-Diäthylaminophenyl, o-, m-, p-Methoxycarbonylphenyl, o-, m-, p-Methoxyphenyl, o-, m-, p-Ethoxyphenyl, o-, m-, p-Phenoxyphenyl, o-, m-, p-Diphenylphenyl, o-, m-, p-Trifluormethylphenyl, o-, m-, p-Trichlormethylphenyl, o-, m-, p-Chlormethylphenyl, o-, m-, p-Ethoxycarbonylphenyl, o-, m-, p-Ethylphenyl, o-, m-, p-Propylphenyl, o-, m-, p-Isopropylphenyl, o-, m-, p-Butylphenyl, o-, m-, p-Pentyloxyphenyl, o-, m-, p-Oktyloxyphenyl, o-, m-, p-Butoxycarbonylphenyl, o-, m-, p-Oktyloxycarbonylphenyl, o-, m-, p-Cyclohexylophenyl, o-, m-, p-Cycloheptylphenyl, o-, m-, p-Cyclobutylphenyl, o-, m-, p-Phenylaminophenyl, Diphenyl, Naphthalyl, Anthralyl.

Die Herstellung der erwähnten äußerst wirksamen Peptisationsverbindungen erfolgt nach dem Schema (Otto, J. pr. [2] 37, 208):

$$2\,R_1{-}SH + Cl{-}S_nCl \xrightarrow[-2\,HCl]{} R_1{-}S_n{-}R_1$$

erfolgen.

Beispielhaft seien genannt:

Bis-(phenyl)-tetrasulfid
Bis-(phenyl)-pentasulfid
Bis-(phenyl)-hexasulfid
Bis-(2-methylphenyl)-tetrasulfid
Bis-(2-methylphenyl)-pentasulfid
Bis-(3-methylphenyl)-tetrasulfid
Bis-(3-methylphenyl)-pentasulfid
Bis-(4-methylphenyl)-tetrasulfid
Bis-(1,2-dimethylphenyl)-tetrasulfid
Bis-(1,6-dimethylphenyl)-tetrasulfid
Bis-(1,4-dimethylphenyl)-tetrasulfid
Bis-(2,4-dimethylphenyl)-tetrasulfid
Bis-(2,4,6-trimethylphenyl)-tetrasulfid
Bis-(4-Ethylphenyl)-tetrasulfid
Bis-(4-Isopropyl-phenyl)-tetrasulfid
Bis-(4-tert.-Butylphenyl)-tetrasulfid
Bis-(4-pentyl-phenyl)-tetrasulfid
Bis-(4-Hexyl-phenyl)-tetrasulfid
Bis-(4-Oktyl-phenyl)-tetrasulfid
Bis-(4-Nonyl-phenyl) -tetrasulfid
Bis-(decylphenyl)-tetrasulfid
Bis-(4-Dodecyl-phenyl)-tetrasulfid
Bis-(4-Tetradecyl-phenyl)-tetrasulfid
Bis-(4-Oktadecyl-phenyl)-tetrasulfid
Bis-(2-Methoxy-phenyl)-tetrasulfid
Bis-(4-Methoxy-phenyl)-tetrasulfid
Bis-(4-Ethoxy-phenyl)-tetrasulfid
Bis-(4-Cyclohexyl-phenyl)-tetrasulfid
Bis-(4-Diphenyl)-tetrasulfid
Bis-(Phenoxyphenyl)-tetrasulfid
Bis-(4-Chlorphenyl)-tetrasulfid
Bis-(3-trifluormethylphenyl)-tetrasulfid
Bis-(2-Methoxycarbonyl-phenyl)-tetrasulfid
Bis-(4-Dimethylamino-phenyl)-tetrasulfid
Bis-(4-Phenylaminophenyl)-tetrasulfid

Beispielhaft sei die Synthese des Bis-(phenyl)-tetrasulfids angegeben. Alle anderen Verbindungen lassen sich analog darstellen.

Synthese des Bis-phenyl-tetrasulfid:

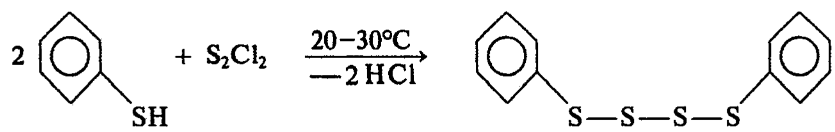


Zu 55 kg (500 Mol) Thiophenol wurden bei 20–30°C unter Rühren und Wasserkühlung 33,0 kg (244,5 Mol, 98,3%) Dischwefeldichlorid getropft. Das hierbei entweichende Salzsäuregas wurde in einen Waschturm geleitet. Sobald die Gesamtmenge an Dischwefeldichlorid zugetropft war, wurde die Innentemperatur langsam bis 60°C gesteigert und bei dieser Temperatur nachgerührt, bis die HCl-Entwicklung abgeklungen war. Anschließend wurde zuerst im $H_2O$-Vakuum, dann im Hochvakuum nachgerührt. Hierbei wurden 0,4 kg Thiophenol zurückgewonnen, wobei die Vorlage mit Methanol/Trockeneis gekühlt wurde. Man erhielt 69,0 kg (d. s. 98% d. Th.) gelbes, öliges, nichtdestillierbares Bis-phenyl-tetrasulfid. Der Brechungsindex ließ sich wegen der starken Eigenfarbe nicht messen.

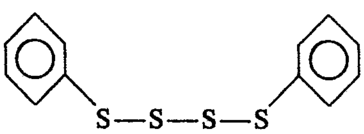
$C_{12}H_{10}S_4$ M = 282,5

| | | |
|---|---|---|
| C | ber. 51,0 | gef. 50,8% |
| H | ber. 3,6 | gef. 3,8% |
| S | ber. 45,4 | gef. 45,5% |

Der Identitätsnachweis weiterer Ansätze erfolgte durch IR-Vergleich.

Polymere mit technologisch günstigen Mooney-Viskositäten erhält man, wenn den Latices nach Polymerisation vor oder nach der Entfernung des Monomeren die Peptisierungsmittel in Konzentrationen von 0,1–10, bevorzugt 0,2–5, insbesondere 0,5–3 Millimol je 100 g Polymer zugesetzt werden.

Nukleophil wirkende Substanzen, wie z. B. Amine, primärer und sekundärer Art mit Alkyl von $C_1$–$C_4$, Sulfide oder Dithionite, beschleunigen die Peptisation zusätzlich, müssen jedoch nicht zugegeben sein. Das Nukleophil sollte, bezogen auf das Diarylpolysulfid, höchstens in äquimolaren Mengen zugesetzt werden.

Die Peptisation der Polymerlatices läuft bei Temperaturen von 5–100°C, bevorzugt bei 15–65°C, insbesondere 30–55°C und bei pH-Werten von 14–3, vorzugsweise 13–5, insbesondere 12–6 ab. Aus wirtschaftlichen Gründen wird man die Peptisation während der Entfernung des Monomeren aus dem Latex, wie z. B. durch Wasserdampfdestillation, oder während der Lagerung durchführen.

Die Verweilzeit des Latex nach der Peptisation beträgt bis zur Aufarbeitung oft mehrere Stunden. Während dieser Zeit muß die alkalische Dispersion viskositätsstabil bleiben. Es ist daher ein wesentlicher Fortschritt, daß die mit den oben beschriebenen Reagenzien peptisierten Latices über mehrere Tage gelagert werden können, ohne ihre Viskosität zu verändern. Aufgrund dieser Viskositätsstabilität ist es möglich, hochviskose schwefelmodifizierte Polychloroprene stufenweise zu peptisieren, um gezielt einen bestimmten Viskositätsbereich einzustellen. Dies war nach der bisherigen Peptisationsmethode mit Thiuramdisulfiden nicht realisierbar.

Die Aufarbeitung des Latex erfolgt nach bekannter Art durch Gefrierkoagulation und anschließender Trocknung wie in der DE-OS 18 07 298 beschrieben.

Ein weiteres wichtiges Kriterium schwefelmodifizierter Polychloroprene ist eine gute Mastizierbarkeit des peptisierten Festkautschuks auf der Walze. Man versteht darunter die weitere Molekulargewichtserniedrigung des Rohpolymeren bei der Verarbeitung auf der Walze oder im Kneter. Wie dem Fachmann bekannt ist, wird die Mastikation des Festkautschuks durch Zusatz von Thiuramdisulfiden, die kurz vor der Aufarbeitung zugesetzt werden, verbessert. Es ist daher überraschend, daß die mit Polysulfiden peptisierten Polymeren, auch ohne weitere Nachsätze aufgearbeitet, ein gutes Mastikationsverhalten zeigen.

Die Chloropren-Schwefel-Copolymerisate besitzen einen Schwefelgehalt von bevorzugt 0,1–2,0 Gew.-%, insbesondere von 0,2–0,5 Gew.-%.

Bezogen auf 100 Gew.-Teile Chloroprenmonomer können bis zu 30 Gew.-Teile eines mit Chloropren copolymerisierbaren Monomers wie Dichlorbutadien, Chlorbutadien oder Methacrylsäure zugesetzt werden.

Zur Demonstration der Erfindung dienen die folgenden Beispiele.

## Beispiel 1

Die Herstellung des schwefelmodifizierten Polychloroprenlatex wird in einem wäßrigen Emulsionssystem durchgeführt.

Die Reaktionskomponenten setzen sich wie folgt zusammen:

a) Monomerphase — Gew.-Teile

| | | |
|---|---|---|
| a) | Monomerphase | Gew.-Teile |
| | Chloropren | 97 |
| | Dichlorbutadien | 3 |
| b) | wäßrige Phase | |
| | Sauerstoff-freies Wasser | 150 |
| | Disproportionierte Harzsäure | 4,5 |
| | Salz eines Naphthalinsulfonsäure-Formaldehyd-Kondensationsproduktes | 0,5 |
| | Natriumhydroxyd | 0,5 |
| | wasserfreies Na-pyrophosphat | 0,5 |
| | Triisopropanolamin | 0,5 |
| | Schwefeldispersion (50gew.-%ig) | 1,4 |
| | Katalysator-Lösung | |
| | Sauerstoff-freies Wasser | 70 |
| | Kaliumpersulfat | 1,0 |
| | $\beta$-Antrachinonsulfonsäure | 0,05 |

Die Emulsion wird mit Stickstoff gespült, auf 40° C erwärmt und durch Zugabe einer kleinen Menge einer verdünnten Kaliumpersulfat-Lösung gestartet. Während der Polymerisation wird weiter Persulfat-Lösung so eindosiert, daß die Temperatur des Ansatzes 40° C nicht übersteigt. Nachdem ein Monomerumsatz von ca. 65% erreicht ist, wird mit 0,1 Teil Phenothiazin abgestoppt, das überschüssige Monomere bei vermindertem Druck durch überhitzten Wasserdampf abgetrennt und der Latex durch Zusatz von 0,4 Teilen Diphenyltetrasulfid und 0,1 Teil $K_2S$ peptisiert. Man erwärmt 1/2 Stunde auf 45° C, kühlt ab und arbeitet den Latex durch Gefrierkoagulation auf der Walze auf. Der Kautschuk zeigt eine Mooney-Viskosität von 42 ME. Zur schnellen Bestimmung der Lösungsviskosität des Polymeren wird der Latex in Aceton gefällt und eine 5%ige Lösung in THF hergestellt. Die Viskositätsmessung erfolgt mit Hilfe eines Brookfield-Viskosimeters.

Beispiel 2

(Einfluß der Peptisationszeit)

Der schwefelmodifizierte Polychloropren-Latex wird wie in Beispiel 1 hergestellt und mit je 0,5 Millimol Diphenyltetrasulfid und $K_2S$ — bezogen auf 1 Mol des eingesetzten monomeren Chloroprens — bei 45° C peptisiert. Man erhält für den peptisierten Latex folgende Lösungsviskositäten.

| Peptisationszeit (h) | Lösungsviskosität einer 5gew.-%igen Lösung (mPa · s) |
|---|---|
| 0 | 10.000 |
| 1/2 | 25 |
| 2 | 25 |
| 3 | 24,5 |
| 4 | 24 |
| 5 | 24 |
| 6 | 23 |
| 8 | 23 |

Beispiel 3

(Vergleichsbeispiel)

Man geht wie in Beispiel 2 vor und verwendet an Stelle von Diphenyltetrasulfid eine äquimolare Menge an Tetraethylthiuramdisulfid und $K_2S$ unter gleichen Bedingungen als Peptisationsagens.

| Peptisationszeit (h) | Viskosität einer 5%igen Lösung (mPa · s) |
|---|---|
| 1 | 140 |
| 2 | 117 |
| 3 | 100 |
| 4 | 88 |
| 5 | 76 |
| 6 | 67 |
| 8 | 54 |

Beispiel 4

(Einfluß des pH-Wertes)

Der nach Beispiel 1 hergestellte Latex wird bei verschiedenen pH-Werten mit je 1,5 Millimol Diphenyltetrasulfid und $K_2S$ bezogen auf 1 Mol des eingesetzten monomeren Chloroprens wie im Beispiel 1 beschrieben peptisiert. Man erhält folgende Lösungsviskositäten:

| Nr. | pH-Wert des Latex | Lösungsviskosität einer 5gew.-%igen Lösung (mPa · s) |
|---|---|---|
| a | 10 | 7 |
| b | 9 | 10 |
| c | 8 | 11,6 |
| d | 7 | 14,5 |
| e | 6 | 15,0 |
| f | 5 | 17,0 |

Beispiel 5

Das Polychloropren, das wie in Beispiel 1 beschrieben hergestellt worden ist, wird nach Beendigung der Polymerisation abgestoppt und vor dem Entfernen des restlichen Monomeren mit Wasserdampf mit Diphenyltetrasulfid versetzt. Die Lösungsviskosität des Polymeren wird nach dem Abkühlen des entgasten Latex gemessen. Die Daten sind der folgenden Tabelle zu entnehmen.

| | Nr. a | b | c | d |
|---|---|---|---|---|
| Diphenyltetrasulfid (DPTS)*) | 1,3 | 1,3 | 1,3 | 0,6 |
| Dibutylamin | — | 0,6 | — | — |
| $K_2S$ | — | — | 0,6 | — |
| Lösungsviskosität sofort nach Monomerentfernung (mPa · s) | 37 | 40 | 35 | 40 |
| Lösungsviskosität nach 24 h bei Raumtemperatur (mPa · s) | 30 | 38 | 35 | 39 |

*) Angabe in mMol pro Mol eingesetztes Chloropren-Monomer.

Beispiel 6

(Vergleichsbeispiel)

Die Peptisation des Polymeren in Latexform erfolgt wie in Beispiel 5 jedoch mit dem Peptisationsagens Tetraethylthiuramdisulfid (TETD).

| | Nr. a | b | c | d | e |
|---|---|---|---|---|---|
| TETD | 1,3 | 1,3 | 1,3 | 2,6 | 3,25 |
| Dibutylamin | — | — | 0,6 | 1,2 | 1,2 |
| $K_2S$ | — | 0,6 | — | — | — |
| Lösungsviskosität sofort nach Monomer-Entfernung (mPa · s) | > 10 000 | > 10 000 | > 10 000 | > 10 000 | > 10 000 |
| Lösungsviskosität nach 24 h bei Raumtemperatur (mPa · s) | 134 | 112 | 46 | 217 | 32 |

Wie man den Beispiel 1—4 entnehmen kann, erfolgt der Polymerabbau bei Einsatz des beanspruchten Peptisationsagens wesentlich rascher (Beispiel 2) als nach der bisher üblichen Methode (Beispiel 3).

Während die Peptisation eines Latex bisher nur in alkalischem Medium möglich war, ist durch Einsatz dieser Sulfide auch ein Polymerabbau im sauren Medium möglich (Beispiel 4). Der Peptisationsschritt läßt sich auch gleichzeitig mit der Entfernung des restlichen Monomeren durchführen (Beispiel 5). Diese Durchführung der Peptisation die bisher nicht möglich war (Beispiel 6), dürfte besonders in wirtschaftlicher Hinsicht interessant sein.

Beispiel 7

Die Herstellung des Polymerlatex und die Prüfung der Lösungsviskosität erfolgt wie in Beispiel 1 beschrieben. Die Peptisationswirksamkeit der beanspruchten Verbindungen der allgemeinen Formel $R_1-S_n-R_1$ soll im folgenden beispielhaft demonstriert werden:

| Nr. | $S_n$ (n) | $R_1$ | Lösungsviskosität einer 5gew.-%igen Lösung (mPa · s) |
|---|---|---|---|
| a[1]) | 2 | Phenyl | 21 |
| b | 4 | Phenyl | 12 |
| c | 4 | Benzyl | 36 |
| d | 4 | p-Chlorphenyl | 15 |
| e | 4 | p-Chlorphenyl | 18 |

[1]) Vergleichsbeispiel.

Beispiel 8—11

Man polymerisiert wie in Beispiel 1 beschrieben, jedoch mit geringem Schwefeleinsatz. Bei einer Peptisationsdauer von 1 Stunde bei 50° C werden nach der Aufarbeitung Kautschuke folgender Viskosität erhalten.

| | Beispiel 8[1]) Schwefel im Ansatz 0,35 | 9 0,35 | 10[1]) 0,45 | 11 0,45 |
|---|---|---|---|---|
| TETD (Gew.-Teile) | 1,3 | 0 | 1,3 | 0 |
| Dibutylamin (Gew.-Teile) | 0,2 | 0 | 0,2 | 0 |
| Diphenyltetrasulfid (Gew.-Teile) | 0 | 0,5 | 0 | 0,5 |
| Viskosität nach Mooney (ML-4) | | | | |
| a) unpeptisiert (ME) | 160 | 160 | 155 | 155 |
| b) peptisiert (ME) | 124 | | 113 | 64 |
| Abbaurate | 36 | 72 | 42 | 91 |

[1]) Vergleichsversuche.

Beispiel 12

Der nach Beispiel 1 hergestellte und von Monomer befreite Polymerlatex wird bei Raumtemperatur mit 0,5 Teilen Di-(Nitrophenyl)hexasulfid versetzt, gerührt und anschließend durch Gefrierkoagulation zum Festkautschuk aufgearbeitet. Die Messung der Mooney-Viskosität bei 100° C ergab einen Wert von 43 ME.

Beispiel 13—16

Schwefelmodifizierter Polychloropren-Latex wird in dem wäßrigen Emulsionssystem gemäß Beispiel 1 hergestellt und peptisiert. Der Latex wurde durch Gefrierkoagulation aufgearbeitet, wie in DE-OS 1 807 298 beschrieben. Die Rohmaterialeigenschaften sind in der folgenden Tabelle angegeben.

| | Beispiel 13[1]) | 14[1]) | 15 | 16 |
|---|---|---|---|---|
| Peptisation mit TETD (Gew.-Teile) | 1,0 | 1,0 | — | — |
| Diphenyltetrasulfid | — | — | 0,4 | 0,4 |
| TETD-Nachsatz | 1,2 | 1,2 | 0,4 | 0,4 |
| ML-4 (sofort) (ME) | 52 | 44 | 49 | 42 |
| ML-4 nach Lagerung (70° C, 1 Tag) (ME) | 50 | 40 | 48 | 42 |
| ML-4 Abbau durch Mastikation (ME) | 45 | 38 | 37 | 32 |
| Δ-Wert | −7 | −6 | −12 | −10 |

[1]) Vergleichsversuche.

## Patentansprüche

1. Verfahren zur Herstellung lagerstabiler 2-Chlor-1,3-butadien-Schwefel Copolymerisate durch Peptisation hochviskoser 2-Chlor-1,3-butadien-Schwefel Copolymerisate mittels Diarylsulfiden als Peptisierungsmittel, dadurch gekennzeichnet, daß man als Peptisierungsmittel eine Verbindung der Formel

$$R_1—S_n—R_1$$

in der

n eine Zahl von 4—6 bedeutet und
$R_1$ einen $C_6—C_{14}$-Arylrest oder einen $C_6—C_{14}$-Aryl-$C_1—C_3$-Alkylrest, die gegebenenfalls substituiert sein können,

darstellt, gegebenenfalls in Kombination mit einer nukleophil wirkenden Substanz dem hochviskosen Latex nach der Polymerisation zusetzt und bei 5—100° C bei einem pH-Wert von 14—3 peptisiert.

2. Verfahren nach Anspruch 1, dadurch gekennzeichnet, daß man das Peptisierungsmittel in Mengen von 0,1 bis 10 Millimol pro 100 g Polymer zusetzt.

3. Verfahren nach Anspruch 1, dadurch gekennzeichnet, daß man das Peptisierungsmittel in Mengen von 0,2 bis 5 Millimol pro 100 g Polymer zusetzt.

## Claims

1. Process for the preparation of 2-chloro-1,3-butadiene/sulphur copolymers which have a long shelflife, by peptisation of highly viscous 2-chloro-1,3-butadiene/sulphur copolymers using diaryl sulphides as peptising agents, characterized in that a compound of the formula

$$R_1—S_n—R_1$$

in which

n denotes a number from 4—6 and
$R_1$ represents a $C_6—C_{14}$-aryl radical or a $C_6—C_{14}$-aryl-$C_1—C_3$-alkyl radical which can be optionally substituted,

if appropriate in combination with a nucleophilic substance, is added, as a peptising agent, to the highly viscous latex after polymerisation, and peptisation is carried out at 5—100° C and at a pH value of 14—3.

2. Process according to claim 1, characterized in that the peptising agent is added in amounts from 0.1 to 10 millimoles per 100 g of polymer.

3. Process according to claim 1, characterized in that the peptising agent is added in amounts from 0.2 to 5 millimoles per 100 g of polymer.

**Revendications**

1. Procédé de fabrication de copolymères 2-chloro-1,3-butadiène-soufre stables à l'entreposage par peptisation de copolymères fortement visqueux de 2-chloro-1,3-butadiène-soufre au moyen de sulfures de diaryle comme agents de peptisation, caractérisé en ce qu'on ajoute comme agent de peptisation un composé de formule:

$$R_1-S_n-R_1$$

dans laquelle

n signifie un nombre de 4 à 6 et
$R_1$ un radical aryle en $C_6-C_{14}$ ou un radical aryl($C_6-C_{14}$)-alcoyle($C_1-C_3$) pouvant éventuellement être substitués,

éventuellement en combinaison avec une substance à activité nucléophile, au latex fortement visqueux après la polymérisation et en ce qu'on peptise à 5—100° C à une valeur de pH de 14—3.

2. Procédé selon la revendication 1, caractérisé en ce qu'on ajoute l'agent de peptisation en des quantités de 0,1 à 10 millimoles par 100 g de polymère.

3. Procédé selon la revendication 1, caractérisé en ce qu'on ajoute l'agent de peptisation en des quantités de 0,2 à 5 millimoles par 100 g de polymère.